(19) Europäisches Patentamt
European Patent Office
Office européen des brevets

(11) **EP 4 303 766 A1**

(12) **EUROPEAN PATENT APPLICATION**

(43) Date of publication:
**10.01.2024 Bulletin 2024/02**

(21) Application number: **22306016.1**

(22) Date of filing: **07.07.2022**

(51) International Patent Classification (IPC):
**G06N 3/04** (2023.01)  **G06N 3/063** (2023.01)
**G06Q 40/04** (2012.01)

(52) Cooperative Patent Classification (CPC):
**G06N 3/049; G06N 3/065; G06Q 40/04**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(71) Applicants:
• **Centre national de la recherche scientifique 75016 Paris (FR)**
• **Université Paris-Saclay 91190 Gif-sur-Yvette (FR)**

(72) Inventor: **ROZENBERG, Marcelo 75014 Paris (FR)**

(74) Representative: **Hautier IP 20, rue de la Liberté 06000 Nice (FR)**

(54) **A NEURO-SYNAPTIC SYSTEM FOR REAL TIME PROCESSING OF TRADING DATA AND ASSOCIATED COMPUTER PROGRAM**

(57)    This neuro-synaptic system (1) for real time processing of trading data of a financial asset to automatically generate trading recommendations on said financial asset, is characterised in that it comprises one or more circuits, each circuit comprising at least one sub-circuit (2), said sub-circuit comprises: a synaptic unit (22) which is a high-pass filter to generate a filtered signal that extracts the fluctuations of the trading data around a slowly varying part; and a neuronal unit (26) modelling a spiking neuron excited by the filtered signal to generate an output signal comprising spikes, each spike corresponding to a trading order.

FIG.1

## Description

The present invention relates to systems and methods for real-time trading.

There is a significant amount of activity exploring artificial intelligence - AI for finance trading.

The known AI systems are based on traditional artificial neuron networks, involving multi-layer networks with a large number of neurons and synapses.

The invention therefore aims at providing an alternative solution to the known AI systems.

According to an aspect of the invention, there is provided a neuro-synaptic system for real time processing of trading data of a financial asset to automatically generate trading recommendations on said financial asset, characterised in that the neuro-synaptic system comprises one or more circuits, each circuit comprising at least one sub-circuit, said sub-circuit comprising: a synaptic unit which is a high-pass filter to generate a filtered signal that extracts the fluctuations of the trading data around a slowly varying part; and a neuronal unit modelling a spiking neuron excited by the filtered signal to generate an output signal comprising spikes, each spike corresponding to a trading order.

According to another aspect of the invention, there is provided a method for real time processing of trading data of a financial asset to automatically generate trading recommendations on said financial asset, characterised in that the method comprising the steps of: high-pass filtering the trading data to generate a filtered signal that extracts the fluctuations of the trading data around a slowly varying part; and generating an output signal by applying a transformation modelling a spiking neuron on the filtered signal, the output signal comprising spikes, each spike corresponding to a trading order.

According to further another aspect of the invention, there is provided a computer program product, or a computer readable memory medium, including one or more sequences of one or more instructions which, when executed by one or more processors, cause an apparatus to at least perform the steps of any method disclosed herein.

One embodiment of the invention will now be described, by way of example only, with reference to the accompanying drawings in which:

- Figure 1 shows an electric representation of a preferred embodiment of the neuro-synaptic system according to the invention;
- Figure 2 shows three graphs of the time evolution of trading data filtered with different value of the time constant of the synaptic unit of the system of Figure 1; and,
- Figure 3 shows graphs of the time evolution of different signals of the system of Figure 1.

The invention is a neuro-synaptic system that processes, in real time, trading data of a financial asset to automatically generate trading recommendations on the asset, i.e. buy or sell orders.

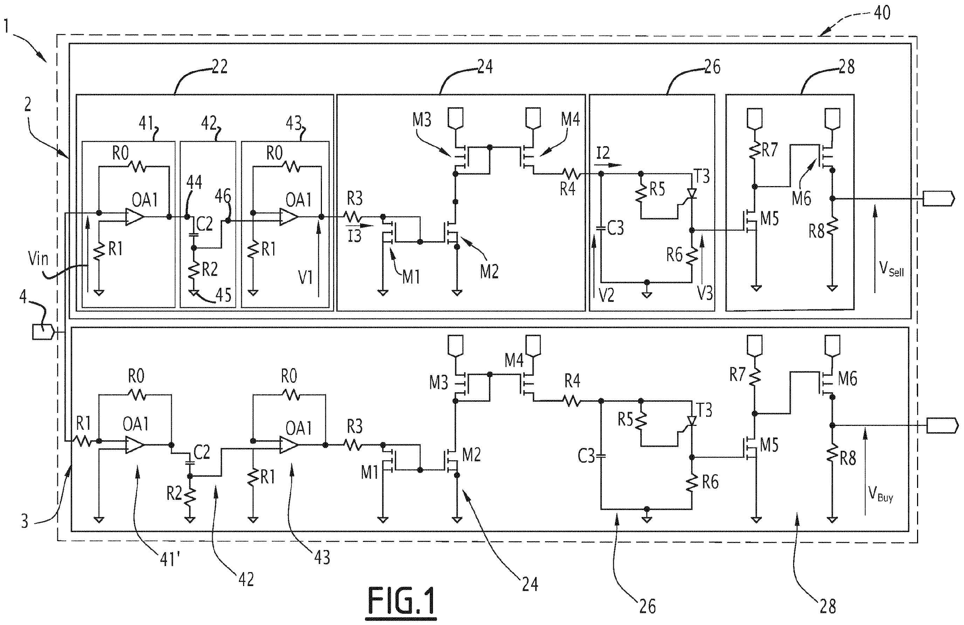

The embodiment shown in Figure 1 is an electronic implementation of the neuro-synaptic system according to the invention.

The neuro-synaptic system 1 comprises an input voltage source 4 and a circuit 40. In the embodiment shown, the circuit 40 is made up of two sub-circuits, respectively a top sub-circuit 2 and a bottom sub-circuit 3, placed in parallel and both connected to the input voltage source 4.

The input voltage source 4 transforms a trading data of a financial asset of interest into an appropriate voltage input signal Vin. Voltages are given relative to a reference potential of the electronic circuit.

The market of the financial asset of interest is preferably a highly liquid market, as the currency market. Consequently, the trading data is preferably an exchange rate between two currencies, for example the EUR/USD rate, the YEN/USD rate, the GBP/EUR rate, etc. However, other examples of trading data may be contemplate as input data, like the price of company shares, state obligations, raw material (gold, oil...), etc.

The trading data is a digital information, obtained from the internet site of a broker for example.

The trading data has a predefined sampling time, for example of 100 msec, 1 sec, or 1 min. The trading data is thus labelled with a time stamp t.

In the following, the trading data is the trading data at the current sampling time, and system 1 processes this piece of information in real-time, i.e. outputs the corresponding trading order in less than the sampling time.

The input voltage signal Vin is a continuous voltage signal, that keeps a constant value until a new updated trading data is communicated or published.

The input voltage source 4 may be implemented by a standard Digital to Analog Converter - DAC, for example a 16 bit DAC.

Preferably, to keep the system in an operating range in line with the variation range of the trading data, a simple normalization is performed by the DAC. The DAC thus subtracts a reference trading value that may be the initial trading data of the day (i.e. the market opening value), the trading data at midnight (00:00:00 GMT), or the trading data when the systems starts to operate. The difference between the current trading data and the reference trading data is then multiplied by a factor. This factor is for example equal to 100 divided by twice the typical percentual daily volatility. If necessary, the value 100 could be increased to 1000, for instance, when using a 12 bit DAC.

As a result, source 4 generates, for any given asset, an input voltage signal Vin that will fluctuate around zero and whose fluctuations during a trading day will be above the noise of the DAC. For example, Vin is of the order of 50 mV.

Whereas the top sub-circuit 2 generates a first output voltage signal VSell corresponding to sell orders, the bottom sub-circuit 3 generates a second output voltage signal VBuy corresponding to buy orders.

In the present embodiment, both sub-circuits use as input the input voltage signal Vin delivered by the input voltage source 4.

The top sub-circuit 2 will now be described in details.

It comprises four units placed in series, respectively a synaptic unit 22, a current mirror unit 24, a neuronal unit 26 and a shaping unit 28.

The synaptic unit 22 and the current mirror unit 24 model the behaviour of the synapse of a neuron, while the neuronal unit 26 and the shaping unit 28 model the behaviour of the rest of the neuron.

The synaptic unit 22 comprises a filter 42 placed between a first amplifier 41 and a second amplifier 43.

The first amplifier 41 brings the input voltage signal Vin to more appropriate values of the order of 0.5 V (in particular for protecting the microcontroller embedding the present circuit). The first amplifier 41 has for example a gain set at around 10 (it is actually 11 for the resistors used). The first amplifier 41 uses for example one operational amplifier OA1 (like an AD822 chip with a double voltage source +-5V).

The filter 42 is a high-pass filter. Preferably, the filter 42 is an RC type filter. It includes, between an input terminal 44 and a reference terminal 45 (brought to the reference potential), a capacitor C2 and a resistor R2, connected in series one with the other. The output terminal 46 of the filter 42 is connected between the capacitor C2 and the resistor R2. The voltage signal output by filter 42 is thus the voltage at the terminals of resistor R2.

The second amplifier 43 amplifies the voltage signal output by filter 42. In the embodiment shown, the second amplifier is identical to the first amplifier 41.

The signal output by the synaptic unit 22 is a filtered voltage signal V1.

The values of R2 and C2 are parameters that have to be adjusted in order to provide the filter unit 42 with a specific value of its characteristic time constant $\tau$ ($\tau = R2 \cdot C2$).

The filter unit 42 rejects a Slowly Varying Part - SVP of the input voltage signal Vin and keeps only the fluctuating part of it. The slowly varying part is the part of the input voltage signal whose variations are slower than the characteristic time constant $\tau$ of filter 42. The fluctuating part is the part of the input signal Vin whose variations are faster than the characteristic time constant $\tau$.

Thus, by adjusting the values of R2 and C2, one can extract variations (i.e. information) at different timescales. The cut-off frequency of these variations is increased when lowering $\tau$.

The Slowly Varying Part - SVP can be compared with the Simple Moving Average - SMA in technical analysis. Adjusting the values of R2 and C2 is like defining the length of the moving time window on which the SMA is calculated. Thus, adjusting the values of R2 and C2 is like extracting variations around the SMA.

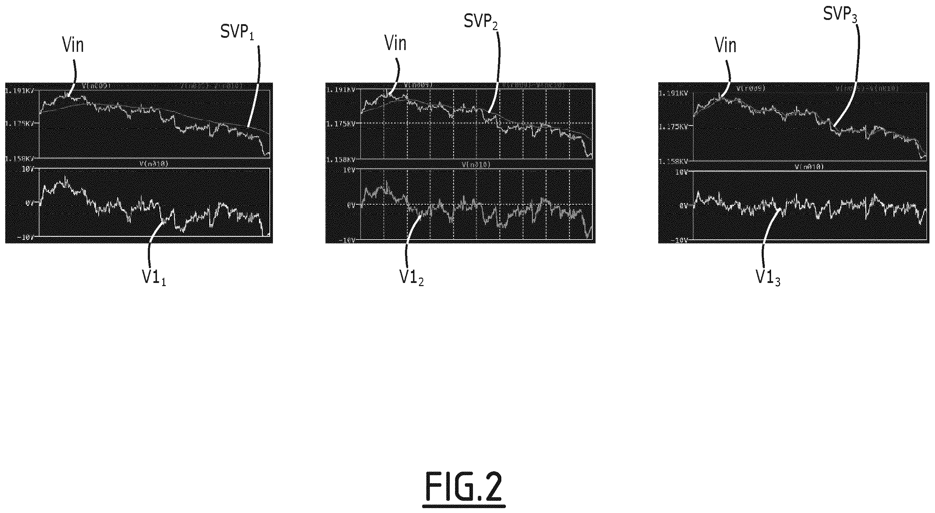

This is illustrated in figure 2, where each pair of graphs is associated with a particular value of the characteristic time constant $\tau$, i.e. a particular realization of filter 42. For each pair of graphs, the upper graph represents the input voltage signal Vin (the same for the three pair of graphs), with the SVP curve superimposed, and the lower graph represents the filtered voltage signal V1, corresponding to the fluctuations of Vin around the SVP. The $SVP_1$ corresponds to a longer filtering period that $SVP_2$, and $SVP_2$ corresponds to a longer filtering period that $SVP_3$. Consequently, $V1_1$ retains variations with a shorter frequency than signal $V1_2$ and $V1_2$ retains variations with a shorter frequency than signal $V1_3$.

The filtered voltage signal V1 have a strength of the order of 1 to 3V, which is appropriate for the excitation of the neuron stage of system 1. However, the neuron stage is excited by current injection.

The function of unit 24 is thus to convert the filtered voltage signal V1 into a current signal I2.

In the embodiment in figure 1, unit 24 is a current mirror circuit that decouples the current applied to its input and the current delivered at its output. In particular, unit 24 allows the output current to replicate the input current whatever the load connected at the output of unit 24.

In the embodiment shown, unit 24 comprises an synaptic resistor R3 to convert the filtered voltage signal V1 into an input current signal I3.

Unit 24 implements a modulated current source based on four transistors, respectively, M1, M2, M3 and M4.

The transistor pair M1/M2 at the input is configured to take only the positive part of the current signal I3 applied to the input of unit 24, i.e. the positive part of the filtered voltage signal V1.

This unit 24 transforms the filtered voltage signal V1 into a proportional current:

$$I3 = [V1 - Vth]/R3,$$

where Vth is the threshold voltage of the NMOS transistors M1/M2 (it is of the order of 0.6 V).

Current I3 is mirrored at the output. The current signal I2 is thus equal to I3.

The synaptic resistance R3 sets the appropriate current intensity to be injected into the neuron stage. In the present example, R3 is set to 20 k$\Omega$ in order to inject into the neuron stage a current in the 40 - 120 $\mu$A range.

The neurone stage is known, for example from document M. Rozenberg et al., "an ultra-compact leaky-integrate-and-fire model for building spiking neural networks", Scientific Reports 9, 11123 (2019).

The neuron stage is made up of the neuronal unit 26 and the shaping unit 28.

Preferably, unit 26 acts as a spiking neuron. It is an artificial electronic neuron of the leaky-integrate-and-fire - LIF neuron type. Alternatively, other spiking neuron types are possible, such as an Integrate and Fire - IF neuron, an Adaptive Exponential integrate-and-fire - AdEx neuron, or the like.

The filtered current signal I2 is continuously integrated. If this incoming signal is fast and strong enough, the neuron eventually reaches a threshold and "fires" an action potential in the form of a voltage spike in the voltage signal V3 output by unit 26.

In the embodiment shown, unit 26 is implemented with a thyristor T3, which is a memristive silicon component.

While the thyristor T3 is in the high resistance state, the capacitor C3 integrates the current signal I2 applied on the input terminal of unit 26. The charge Q3 accumulated by capacitor C3 translates itself into a membrane voltage V2: V2=Q3/C3.

When this membrane voltage is above a characteristic breakdown voltage of the thyristor T3, that leads to the sudden collapse of the anode-cathode resistance of the thyristor T3. This produces a fast discharge of the charge Q3 accumulated in the capacitor C3 through the small output resistance R6 in the form of a voltage spike.

The capacitor C3 discharges until the current through the thyristor T3 becomes smaller than a holding current of the thyristor T3. At that point the resistance of the thyristor recovers its high value (this is the memristive effect).

Note that the value of the resistor R5 defines, with C3, the leakage time constant of the membrane voltage.

A smaller value of C3 leads to more frequent spikes.

Thus, unit 26 emits a voltage spike V3 when the leaky-integration of the input current signal by the C3 reaches a voltage threshold.

Downstream, unit 28 transforms each spike of the voltage signal V3 output by unit 26 into a proper square voltage pulse. The signal output by unit 28 is the first output voltage signal VSell.

This final pulse-shaping unit is for example implemented with two CMOS transistors, M5 and M6. This stage converts each spike into a pulse of a standard value of 5V. If necessary, this value may be easily modified by adjusting the voltage sources of the CMOS transistors M5 and M6.

The first output voltage signal VSell has then to be submitted to an automatic trading platform or executed by a broker firm.

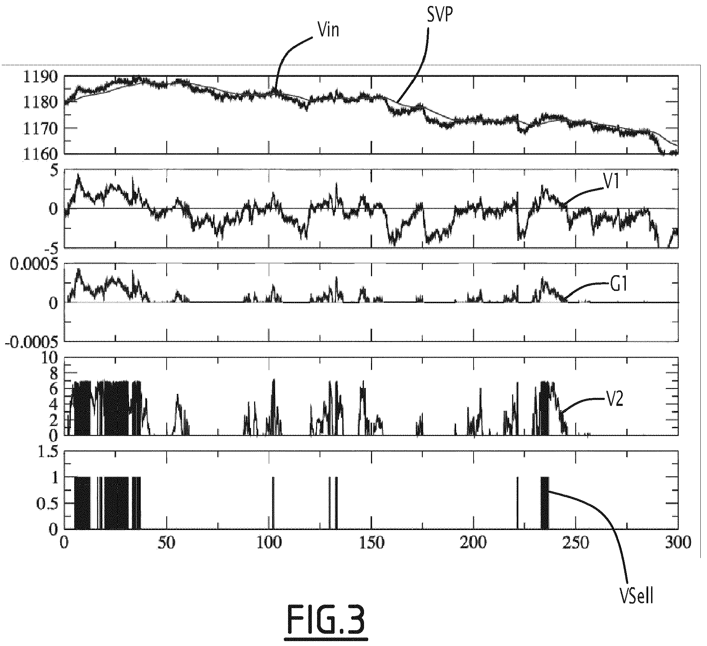

The different signals along the sub-circuit 2 are illustrated in figure 3: Vin is the input voltage signal (corresponding for example to the EUR/USD rate); V1 is the filtered voltage signal comprising the fluctuations of Vin around the SVP chosen; G1 is the positive part of current 13; V2 is the membrane voltage; and VSell is the output voltage signal corresponding to sell orders.

The bottom sub-circuit 3 is identical to the top sub-circuit 2 except that the first amplifier 41' has a negative gain, i.e. it inverts the input voltage signal Vin.

This is the only difference between the two sub-circuits. The reason is that the heuristic is based on selling when the price has increased fast and significantly, while buying when it has similarly decreased. Other embodiments are possible.

The voltage signal VBuy output by sub-circuit 3 is a buy order that has to be submitted to the automatic trading platform or executed by the broker firm.

In an alternative embodiment, the trading data used for the bottom sub-circuit is the inverse of the trading data used for the top sub-circuit. For example, if the trading data used by the top sub-circuit is the EUR/USD rate, the trading data used by the bottom sub-circuit is the USD/EUR rate. In this case, the bottom sub-circuit is then totally identical to the top-sub-circuit, the inversion of the trading data being done upstream by the appropriate voltage source.

In another alternative embodiment, several circuits identical to the circuit of figure 1 (combining top and bottom sub-circuits) are placed in parallel one with the other. Each circuit has a different values of the time constant of the filtering stage to extract different time-scaled fluctuations in the trading signal and/or different values of the time constant of the neuron stage to trigger the emission of a pulse in different conditions. The system advantageously comprises a final unit to combine the sell signals (respectively the buy signals) of the different circuits to generate a final buy order (respectively a final buy order). This final unit for example generates a buy (respectively sell) order when the majority of the circuits emits a buy (respectively sell) order at the same time.

In another alternative embodiment, the different units of one sub-circuit can be realized with another type of circuit and/or electronic components. For example, the first and the second amplifiers are voltage amplification circuits and other ways of realizing such amplifiers are known. The filter unit could also be common to the top and bottom sub-circuits.

The invention may be implemented in different fashions. In particular, if the preferred embodiment is an electronic circuit, alternatively the invention could be embodied within a computer program product executed by a computer. In this case, units 41, 43, 24 and 28 are not necessary. Indeed, in such a software implementation, there is no need of unit 24 to make the current independent of the load.

The table below indicates possible values of the components of the circuit of figure 1.

[Table 1]

| C2 | capacitor | 10mF |
| --- | --- | --- |
| C3 | capacitor | 100$\mu$F |
| M1 | NMOS transistor | |

(continued)

| M2 | NMOS transistor | |
|----|----|----|
| M3 | PMOS transistor | |
| M4 | PMOS transistor | |
| S1 | NMOS transistor | |
| S2 | NMOS transistor | |
| S1 | PMOS transistor | |
| S2 | PMOS transistor | |
| R0 | resistor | 10 kΩ |
| R1 | resistor | 1 kΩ |
| R2 | resistor | 10 kΩ |
| R3 | resistor | 20 kΩ |
| R4 | resistor | 1 kΩ |
| R5 | resistor | 570 kΩ |
| R6 | resistor | 3 kΩ |
| R7 | resistor | 10 kΩ |
| R8 | resistor | 10 kΩ |
| T3 | thyristor | |
| OP1 | integrated circuit op amp | AD822 |

Note that the functional blocks of Figure 1 could be read as the successive steps of a method, each step of said method corresponding to realizing the function of the associated block.

Thus, Figure 1 also shown a particular embodiment of a method for real time processing trading data of a financial asset to automatically generate trading recommendations on said financial asset, said method comprising the steps of: high-pass filtering the trading data to generate a filtered signal that extracts the fluctuations of the trading data around a slowly varying part; and, generating an output signal by applying a transformation modelling a spiking neuron on the filtered signal, the output signal comprising spikes, each spike corresponding to a trading order.

The field of application is the present invention is finance trading, in particular highfrequency trading.

**Claims**

1. A neuro-synaptic system (1) for real time processing of trading data of a financial asset to automatically generate trading recommendations on said financial asset, **characterised in that** the neuro-synaptic system comprises one or more circuits, each circuit comprising at least one sub-circuit (2), said sub-circuit comprising:

- a synaptic unit (22) which is a high-pass filter to generate a filtered signal that extracts the fluctuations of the trading data around a slowly varying part; and,
- a neuronal unit (26) modelling a spiking neuron excited by the filtered signal to generate an output signal comprising spikes, each spike corresponding to a trading order.

2. The neuro-synaptic system according to claim 1, wherein the neuronal unit (26) generates sell trading orders on the positive part of the filtered signal and buy trading orders on the negative part of the filtered signal.

3. The neuro-synaptic system according to any one of the claims 1 to 2, wherein the trading data is an exchange rate between two currencies.

4. The neuro-synaptic system according to any one of the claims 1 to 3, comprising an input voltage source (4) transforming a trading data of a financial asset into a voltage input signal (Vin).

5. The neuro-synaptic system according to claim 4, wherein the synaptic unit (22) comprises successively a first amplifier (41), a filter (42) and a second amplifier (43).

6. The neuro-synaptic system according to any one of the claims 4 to 5, wherein the sub-circuit (2) further comprises a current mirror unit (24), located between the synaptic unit (22) and the neuronal unit (26), the synaptic unit (22) filtering the voltage input signal (Vin) provided by the input voltage source (4) to output a filtered output voltage (V1), the current mirror unit (24) outputting a current signal (12) from the filtered output voltage (V1), and the neuronal unit (26) processing the current signal (12) to generate the output signal.

7. The neuro-synaptic system according to claim 6, further comprising a shaping unit (28) to transform each spike of a voltage signal (V3) output by the neuronal unit (26) into a square voltage pulse to make the output signal.

8. The neuro-synaptic system according to any one of the claims 1 to 7, wherein each circuit comprises two similar sub-circuits, the first sub-circuit being dedicated to generating sell trading orders from the trading data and the second circuit being dedicated to generating buy orders from the trading data or an inverse of the trading data.

9. The neuro-synaptic system according to any one of the claims 1 to 8, comprising a plurality of similar circuits, each circuit being **characterised by** a specific value of the time constant of the synaptic unit and/or a specific value of a time constant of the neuron unit.

10. The neuro-synaptic system according to any one of the claims 1 to 9, wherein the spiking neuron is a leaky-integrate-and-fire neuron, an integrate and fire neuron, or an adaptive exponential integrate-and-fire neuron.

11. A method for real time processing of trading data of a financial asset to automatically generate trading recommendations on said financial asset, **characterised in that** the method comprising the steps of:

> - high-pass filtering the trading data to generate a filtered signal that extracts the fluctuations of the trading data around a slowly varying part; and,
> - generating an output signal by applying a transformation modelling a spiking neuron on the filtered signal, the output signal comprising spikes, each spike corresponding to a trading order.

12. A computer program comprising software instructions which, when executed by a computer, embodied the neuro-synaptic system according to any of the claims 1 to 10.

FIG.1

FIG.2

FIG.3

EP 4 303 766 A1

Europäisches
Patentamt

European
Patent Office

Office européen
des brevets

# EUROPEAN SEARCH REPORT

Application Number

EP 22 30 6016

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/099680 A2 (INNATERA NANOSYSTEMS B V [NL]) 22 May 2020 (2020-05-22)<br>* abstract *<br>* paragraph [0001] – paragraph [0014] *<br>* paragraph [0016] *<br>* paragraph [0024] – paragraph [0049] *<br>* paragraph [0063] – paragraph [0069] *<br>* paragraph [0071] – paragraph [0074] *<br>* paragraph [0078] – paragraph [0086] *<br>* paragraph [0091] – paragraph [0102] *<br>* paragraph [0110] – paragraph [0112] *<br>* paragraph [0121] – paragraph [0145] *<br>* claims 1-53; figures 1-9 *<br>----- | 1-12 | INV.<br>G06N3/04<br>G06N3/063<br>G06Q40/04 |
| X | US 2013/103626 A1 (HUNZINGER JASON FRANK [US]) 25 April 2013 (2013-04-25)<br>* abstract *<br>* paragraph [0004] – paragraph [0018] *<br>* paragraph [0037] – paragraph [0059] *<br>* paragraph [0065] – paragraph [0067] *<br>* paragraph [0072] – paragraph [0074] *<br>* paragraph [0078] – paragraph [0090] *<br>* claims 1-80; figures 1-11 *<br>----- | 1-12 | |
| A,D | M. ROZENBERG ET AL.: "an ultra-compact leaky-integrate-and-fire model for building spiking neural networks", SCIENTIFIC REPORTS, vol. 9, 2019, page 11123, XP002808309,<br>----- | 1-12 | TECHNICAL FIELDS SEARCHED (IPC)<br><br>G06N<br>G06Q |

The present search report has been drawn up for all claims

| Place of search | Date of completion of the search | Examiner |
|---|---|---|
| Munich | 22 December 2022 | Eftimescu, Nicolae |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 22 30 6016

This annex lists the patent family members relating to the patent documents cited in the above-mentioned European search report.
The members are as contained in the European Patent Office EDP file on
The European Patent Office is in no way liable for these particulars which are merely given for the purpose of information.

22-12-2022

| Patent document cited in search report | | Publication date | Patent family member(s) | | Publication date |
|---|---|---|---|---|---|
| WO 2020099680 | A2 | 22-05-2020 | CN 113272828 | A | 17-08-2021 |
| | | | CN 113287122 | A | 20-08-2021 |
| | | | EP 3881241 | A1 | 22-09-2021 |
| | | | EP 3881246 | A2 | 22-09-2021 |
| | | | JP 2022507721 | A | 18-01-2022 |
| | | | JP 2022509618 | A | 21-01-2022 |
| | | | KR 20210124960 | A | 15-10-2021 |
| | | | KR 20210127133 | A | 21-10-2021 |
| | | | US 2022012564 | A1 | 13-01-2022 |
| | | | US 2022230051 | A1 | 21-07-2022 |
| | | | WO 2020099583 | A1 | 22-05-2020 |
| | | | WO 2020099680 | A2 | 22-05-2020 |
| US 2013103626 | A1 | 25-04-2013 | CN 103890787 | A | 25-06-2014 |
| | | | EP 2769339 | A1 | 27-08-2014 |
| | | | JP 5944518 | B2 | 05-07-2016 |
| | | | JP 2014532907 | A | 08-12-2014 |
| | | | KR 20140084219 | A | 04-07-2014 |
| | | | US 2013103626 | A1 | 25-04-2013 |
| | | | WO 2013059703 | A1 | 25-04-2013 |

EPO FORM P0459

For more details about this annex : see Official Journal of the European Patent Office, No. 12/82